# NEUE EUROPÄISCHE PATENTSCHRIFT

(11) **EP 1 531 259 B2**
(45) Veröffentlichungstag und Bekanntmachung des Hinweises auf die Entscheidung über den Einspruch: **04.09.2013**
(45) Hinweis auf die Patenterteilung: 23.01.2008
(21) Anmeldenummer: 04105064.2
(22) Anmeldetag: 15.10.2004
(51) Int. Cl.: F02M 51/06, F02M 61/16, F02M 55/00

(54) **Brennstoffeinspritzventil**
Fuel injection valve
Injecteur de carburant

(30) Priorität: 17.11.2003 DE 10353639
(43) Veröffentlichungstag der Anmeldung: 18.05.2005
(73) Patentinhaber: ROBERT BOSCH GMBH, 70442 Stuttgart (DE)
(72) Erfinder: Hohl, Guenther, 70569, Stuttgart (DE)
(74) Vertreter: Körfer, Thomas

(56) Entgegenhaltungen:
- EP-A- 1 046 809
- EP-A2- 1 046 809
- WO-A-03/033904
- WO-A-03/038273
- DE-A1- 10 050 053
- DE-A1- 10 052 485
- DE-A1- 19 962 177
- GB-A- 580 477
- US-A- 4 365 746
- US-A- 4 365 746

## Beschreibung

### Stand der Technik

Die Erfindung geht aus von einem Brennstoffeinspritzventil nach der Gattung des Hauptanspruchs.

Beispielsweise ist aus der EP 0 218 895 A1 ein Zumeßventil zur Dosierung von Flüssigkeiten oder Gasen, insbesondere ein Einspritzventil für Brennstoffeinspritzsysteme von Brennkraftmaschinen bekannt, welches einen piezoelektrischen Stapelaktor aufweist, dessen Längung bei Anlegen einer Erregerspannung auf eine eine Zumeßöffnung steuernde Ventilnadel übertragen wird und den Hubweg der Ventilnadel bestimmt. Zum Ausgleich von temperaturbedingten Längenänderungen des Stapelaktors liegt dieser mit seinem einen Ende an einem Dämpfungskolben an, der einen flüssigkeitsgefüllten Dämpfungsraum begrenzt. Der Dämpfungsraum steht über einen Drosselspalt mit einem Ausgleichsraum in Verbindung. Dämpfungsraum und Ausgleichsraum bilden ein hermetisch abgeschlossenes gasfreies Flüssigkeitspolster, das bei der Erregung des piezoelektrischen Aktors diesen in Bezug auf das Gehäuse stationär festlegt.

Nachteilig bei dem aus der EP 0 218 895 A1 bekannten Brennstoffeinspritzventil ist insbesondere, daß bei zunehmendem Druck des Brennstoffs dieser der Federkraft der Ventilschließfeder entgegenwirkt, so dass bei Maximaldruck die geringste Schließkraft vorliegt. Dies führt zu Leckageverlusten. Bei Minimaldruck wirkt die Schließfederkraft dagegen auf den Dichtsitz, was bei zu hohen Werten zu Verschleiß und damit ungenügender Dauerlaufstabilität führt. Weiterhin erfordern Strahlwinkelvarianten eine Änderung der Sitzgeometrie, die für Dauerlaufbelange optimiert ist.

Die DE 199 62 177 A1 offenbart ein Brennstoffeinspritzventil gemäß dem Oberbegriff des Anspruchs 1.

Die EP-A-1 046 809 offenbart eine Fluiddosiervorrichtung bzw. einen Hochdruckinjektor mit einem Gehäuse, einer darin befindlichen unter Fluiddruck stehenden Kammer und einer durch die Kammer hindurchgeführte Ventilnadel, deren erstes Ende außerhalb der Kammer mit einem Hub beaufschlagbar ist und deren zweites Ende mit einem am Gehäuse positionierten Ventilsitz ein mit der Kammer in Verbindung stehendes Ventil bildet. Als Durchführungselement für die Ventilnadel an deren erstem Ende wird ein Metallbalg eingesetzt, der hermetisch abdichtet und nur geringe axiale druckbedingte Kräfte erzeugt.

Die US-A-4 365 746 offenbart ein Brennstoffeinspritzventil mit einer zusätzlichen Drallvorrichtung. Eine Wirbelkammer ist zwischen der unteren Seite eines Trennelements und dem Ventilsitz vorgesehen. Somit wird die Innenseite eines Durchgangslochs des Düsenkörpers in eine Druckkammer und die Wirbelkammer unterteilt. Das Trennelement weist weiterhin an seiner äußeren Umfangswand eine Aussparung auf, welche in einem vorbestimmten Winkel hinsichtlich der Mittenachse des Durchgangslochs geneigt ist. Somit wird das Fluid der Wirbelkammer von der Aussparung mit einer verwirbelten Strömung zugeführt und tritt aus der Wirbelkammer durch eine Düsenaustrittsöffnung mit der wirbelnden Strömung aus.

### Vorteile der Erfindung

Das erfindungsgemäße Brennstoffeinspritzventil mit den kennzeichnenden Merkmalen des Hauptanspruchs hat demgegenüber den Vorteil, dass durch die Einführung einer elastischen Wellrohrdichtung im Bereich des Stapelaktors gezielt ein Kraftausgleich zwischen den in Öffnungs- und Schließrichtung wirkenden hydraulischen und elastischen Kräften vorgenommen werden kann. Eine zusätzliche Drallvorrichtung am Ventilschließkörper ermöglicht Strahlwinkelvarianten ohne Änderung der Sitzgeometrie.

Durch die in den Unteransprüchen aufgeführten Maßnahmen sind vorteilhafte Weiterentwicklungen des im Hauptanspruch angegebenen Brennstoffeinspritzventils möglich.

Erfindungsgemäß ist die Wellrohrdichtung so angeordnet, dass die durch den Brennstoff wirkenden Kräfte die Federkraft der Ventilschließfeder und damit bei zunehmendem Druck die Dichtwirkung des Ventilsitzes unterstützen

Erfindungsgemäß ist außerdem, dass die Drallvorrichtung dem Strahlkegel des nach außen öffnenden Brennstoffeinspritzventils eine Strahlwinkeländerung überlagert.

Erfindungsgemäß ist die Drallvorrichtung in Form eines auf die Ventilnadel aufgepressten Rings mit Durchströmöffnungen ausgebildet, die schräg in einer Umfangsrichtung durch den Ring verlaufen. Durch Einsatz von Ringen mit unterschiedlich geneigten Durchströmöffnungen können in einfacher Weise viele Strahlwinkelvarianten erzeugt werden.

### Zeichnung

Ein Ausführungsbeispiel der Erfindung ist in der Zeichnung vereinfacht dargestellt und in der nachfolgenden Beschreibung näher erläutert. Es zeigen:
- Fig. 1: einen schematischen Schnitt durch ein Ausführungsbeispiel eines erfindungsgemäß ausgestalteten Brennstoffeinspritzventils,
- Fig. 2A: einen schematischen Schnitt durch das abspritzseitige Ende des in Fig. 1 dargestellten Ausführungsbeispiels eines erfindungsgemäß ausgestalteten Brennstoffeinspritzventils im Bereich IIA in Fig. 1, und
- Fig. 2B: einen schematischen Schnitt durch das Ausführungsbeispiel eines erfindungsgemäß ausgestalteten Brennstoffeinspritzventils entlang der Linie IIB-IIB in Fig. 2A.

### Beschreibung des Ausführungsbeispiels

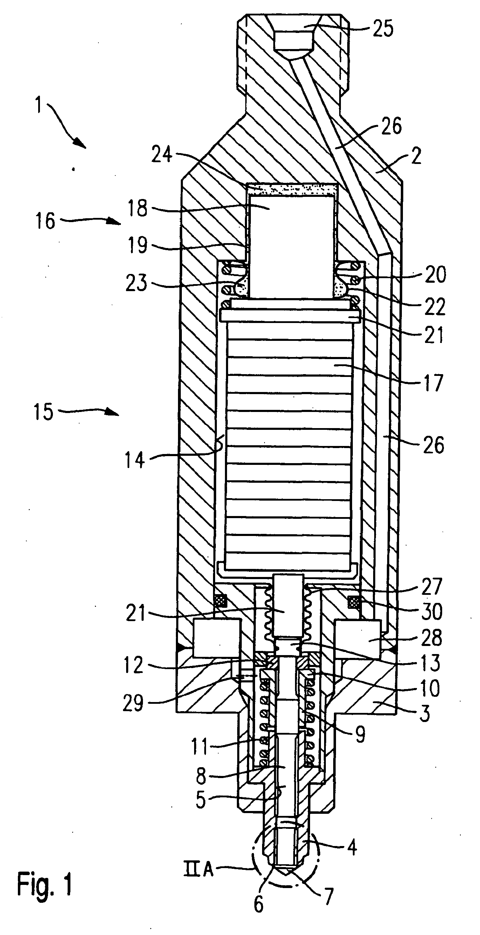

Ein in Fig. 1 dargestelltes Ausführungsbeispiel eines erfindungsgemäßen Brennstoffeinspritzventils 1 ist in der Form eines Brennstoffeinspritzventils 1 für Brennstoffeinspritzanlagen von gemischverdichtenden, fremdgezündeten Brennkraftmaschinen ausgeführt. Das Brennstoffeinspritzventil 1 ist als außenöffnendes Brennstoffeinspritzventil 1 ausgebildet.

Das Brennstoffeinspritzventil 1 weist ein Ventilgehäuse 2 auf, welches in ein Gehäusebauteil 3 eingeschoben ist. Zwischen dem Ventilgehäuse 2 und dem Gehäusebauteil 3 ist ein Düsenkörper 4 angeordnet, welcher eine axiale Durchgangsbohrung 5 aufweist. An dem Düsenkörper 4 ist eine Ventilsitzfläche 6 ausgebildet, welche mit einem Ventilschließkörper 7 einen Dichtsitz bildet. Der Ventilschließkörper 7 steht kraftschlüssig mit einer Ventilnadel 8 in Verbindung, die in dem Düsenkörper 4 geführt ist.

Die Ventilnadel 8 ist in einer auf der Ventilnadel 8 axial verschieblichen Hülse 9 geführt, die einen Ringflansch 10 trägt. Zwischen dem Ringflansch 10 der Hülse 9 und dem Düsenkörper 4 stützt sich eine Ventilschließfeder 11 ab, wodurch die Hülse 9 über eine Stützscheibe 12 an einem Vorsprung 13 der Ventilnadel 8 anliegt. Durch den Druck der Ventilschließfeder 11 wird der Ventilschließkörper 7 in dichtender Anlage an der Ventilsitzfläche 6 gehalten.

Das Ventilgehäuse 2 weist eine im Durchmesser gestufte axiale Sackbohrung 14 auf, welche einen ersten Abschnitt 15 und einen zweiten, im Durchmesser reduzierten zweiten Abschnitt 16 umfaßt. In dem ersten Abschnitt 15 ist ein piezoelektrischer Stapelaktor 17 angeordnet. In dem zweiten Abschnitt 16 ist ein Dämpfungskolben 18 derart angeordnet, daß zwischen dem Dämpfungskolben 18 und dem Ventilgehäuse 2 ein Ringspalt 19 ausgebildet ist. Der Dämpfungskolben 18 liegt an dem Stapelaktor 17 an. Eine Druckfeder 20 ist so in dem Ventilgehäuse 2 angeordnet, daß der Stapelaktor 17 in Richtung auf die Ventilnadel 8 mit einem Druck beaufschlagt ist. Die Federkraft der Druckfeder 20 ist dabei wesentlich keiner als die Federkraft der Ventilschließfeder 11, so daß das Brennstoffeinspritzventil 1 im unbestromten Zustand des Stapelaktors 17 geschlossen gehalten wird.

An der anderen Seite des Stapelaktors 17 ist ein Betätigungselement 21 angeordnet, welches in Wirkverbindung mit der Ventilnadel 8 steht. Zwischen dem Ventilgehäuse 2 und einem den Stapelaktor 17 abschließenden Flansch 21 ist eine Membran 22 ausgebildet. Ein von dieser umschlossener Ausgleichsraum 23 steht über den Ringspalt 19, der als Drossel wirkt, mit einem Dämpfungsraum 24 in Verbindung. Der Dämpfungsraum 24 und der Ausgleichsraum 23 sind mit einer geeigneten Flüssigkeit gefüllt und nach außen abgeschlossen.

Der Brennstoff wird über eine zentrale Brennstoffzufuhr 25 zugeleitet und über einen Brennstoffkanal 26 in die Sackbohrung 14 des Brennstoffeinspritzventils 1 geführt, um von dort durch den Düsenkörper 4 zum Dichtsitz geleitet zu werden.

Bei geschlossenem Brennstoffeinspritzventil 1 steht der Brennstoff mit einem gesteuerten Druck an dem Ventilschließkörper 7 an. Wird eine Erregerspannung an den Stapelaktor 17 angelegt, vergrößert sich dessen axiale Länge. Die Längenänderung, die sehr schnell erfolgt, wird über das Betätigungselement 21 auf die Ventilnadel 8 übertragen, wodurch der Ventilschließkörper 7 von der Ventilsitzfläche 6 abhebt und Brennstoff abgespritzt wird. Die Bewegung wird ungedämpft auf die Ventilnadel 8 übertragen, da sich die Flüssigkeit in dem Dämpfungsraum 24 gegenüber schnellen Bewegungen starr verhält.

Auftretende Längenänderungen des Stapelaktors 17 infolge von Temperaturerhöhungen der Brennkraftmaschine werden dagegen durch den Dämpfungskolben 18 ausgeglichen, da sie langsam und damit quasistatisch verlaufen. Flüssigkeit wird dabei aus dem Dämpfungsraum 24 in den Ausgleichsraum 23 verdrängt, bis der Stapelaktor 17 wiederum gehäuseseitig festliegt. Bei einer erneuten Bestromung des Stapelaktors 17 wird nun wieder der volle Hub auf die Ventilnadel 8 übertragen.

Da bei zunehmendem Druck des Brennstoffs dieser der Ventilschließfeder 11 entgegenwirkt, liegt bei Maximaldruck die geringste Schließkraft vor. Dies führt zu Leckageverlusten. Bei Minimaldruck wirkt die Schließfederkraft dagegen auf den Dichtsitz, was bei zu hohen Werten zu Verschleiß und damit ungenügender Dauerlaufstabilität führt. Weiterhin erfordern Strahlwinkelvarianten bei einem nach außen öffnenden Brennstoffeinspritzventil eine Änderung der Sitzgeometrie.

Erfindungsgemäß werden daher Maßnahmen getroffen, welche einerseits die Kräfte auf den Ventilschließkörper 7 in der gewünschten Weise verteilen und andererseits eine Strahlwinkelvariation bei konstanter Sitzgeometrie ermöglichen.

Ersteres kann dadurch erreicht werden, daß der Stapelaktor 17 abströmseitig über eine Wellrohrdichtung 27 abgedichtet wird. Die Wellrohrdichtung 27 ist dabei an dem Düsenkörper 4 und an der Ventilnadel 8 verschweißt. Der Brennstoff strömt durch die Brennstoffkanäle 26 in einen Sammelraum 28 und weiter durch zumindest eine Zulaufbohrung 29 Richtung Dichtsitz.

Für die Ventilnadel 8 wirkt der hydraulische Druck des Brennstoffs auf die Wellrohrdichtung 27 in eine Schließrichtung und auf den Ventilschließkörper 7 in einer Öffnungsrichtung. Mit wachsendem Durchmesser der Wellrohrdichtung 27, welche im Durchmesser etwas größer als der Dichtsitz sein sollte, läßt sich eine mit zunehmendem Druck ansteigende Schließkraft erzeugen. Damit kann die Ventilschließfeder 11 kleiner dimensioniert werden. Die Abdichtung des Stapelaktors 17 am Ventilgehäuse 2 erfolgt über eine beispielsweise 0-ringförmige Dichtung 30.

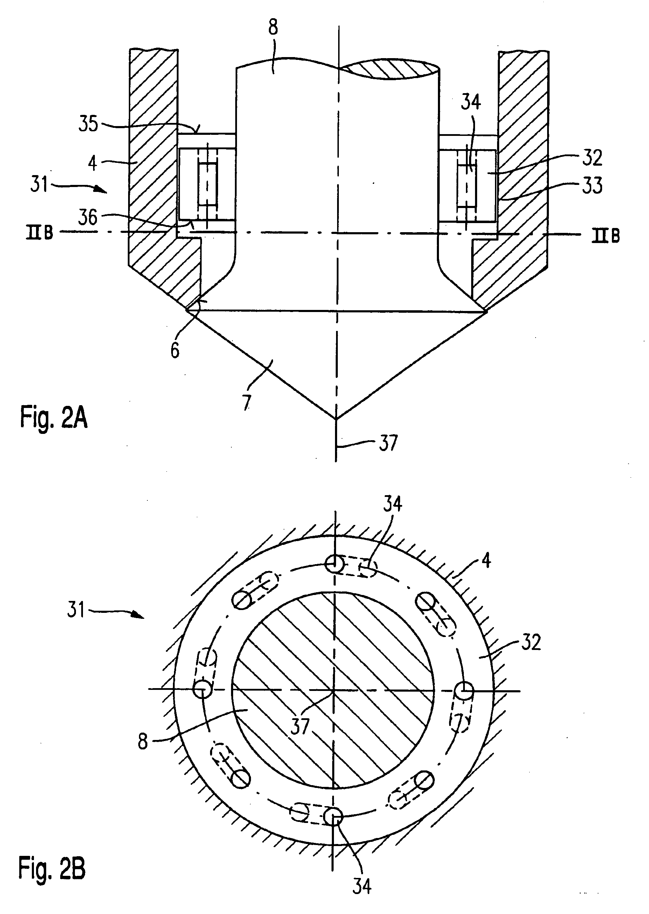

Um eine Strahlwinkelvariation bei konstanter Sitzgeometrie zu ermöglichen, ist weiterhin erfindungsgemäß eine Drallvorrichtung 31 am Ventilschließkörper 7 vorgesehen. Diese erfindungsgemäße Maßnahme wird unter Bezugnahme auf Fig. 2A und 2B im folgenden näher beschrieben.

In Fig. 2A ist eine vergrößerte Ansicht des in Fig. 1 mit IIA bezeichneten Ausschnitts dargestellt.

Das Brennstoffeinspritzventil 1 weist an seiner Ventilnadel 8 zulaufseitig des Ventilschließkörpers 7 eine Drallvorrichtung 31 auf, welche in Form eines auf die Ventilnadel 8 aufgepreßten Rings 32 ausgebildet ist. Der Ring 32 steht dabei mit der Ventilnadel 8 in Formschluß und bildet mit dem Düsenkörper 4 einen Ringspalt 33, welcher eine Bewegung des Rings 32 mit der Ventilnadel 8 relativ zum Düsenkörper 4 erlaubt.

Der Ring 32 weist mehrere Durchströmöffnungen 34 auf, welche gleichmäßig auf einem Umfang des Rings 32 verteilt sind und sich von einer zuströmseitigen Stirnfläche 35 zu einer abströmseitigen Stirnfläche 36 des Rings 32 erstrecken. Die Durchströmöffnungen 34 verlaufen dabei in einer Umfangsrichtung schräg durch den Ring 32, wodurch sie dem durchströmenden Brennstoff eine Geschwindigkeitskomponente in Umfangsrichtung mitteilen.

Fig. 2B zeigt in einer schematischen Schnittansicht einen Schnitt durch das in Fig. 2A dargestellte Ausführungsbeispiel des erfindungsgemäß ausgestalteten Brennstoffeinspritzventils 1 entlang der Linie IIB-IIB in Fig. 2A.

In Fig. 2B sind die Durchströmöffnungen 34 sowie ihr Verlauf durch den Ring 32 erkennbar. Im Ausführungsbeispiel sind acht Durchströmöffnungen 34 vorgesehen, es können aber je nach den Anforderungen mehr oder weniger sein. Analog kann die Neigung der Durchströmöffnungen 34 gegenüber einer Längsachse 37 der Ventilnadel 8 in beliebiger Weise zur Erreichung der Strahlwinkelveränderung angepaßt werden.

Die Erfindung ist nicht auf das dargestellte Ausführungsbeispiel beschränkt und für beliebige Bauweisen von nach außen öffnenden Brennstoffeinspritzventilen 1 anwendbar. Insbesondere sind die einzelnen Merkmale des Ausführungsbeispiels beliebig miteinander kombinierbar.

## Patentansprüche

1. Brennstoffeinspritzventil (1), insbesondere zum direkten Einspritzen von Brennstoff in den Brennraum einer Brennkraftmaschine, mit einer Ventilnadel (8), welche durch einen Aktor (17) betätigbar ist und durch eine Ventilschließfeder (11) so beaufschlagt ist, dass ein mit der Ventilnadel (8) in Wirkverbindung stehender, dem Brennraum zugewandter Ventilschließkörper (7) im unbetätigten Zustand des Aktors (17) in dichtender Anlage an einer an einem Düsenkörper (4) ausgebildeten Ventilsitzfläche (6) gehalten wird, wobei an einem zuströmseitigen Ende der Ventilnadel (8) eine Wellrohrdichtung (27) ist und das Brennstoffeinspritzventil (1) als außenöffnendes Brennstoffeinspritzventil (1) ausgebildet ist, wobei
die Wellrohrdichtung (27) elastisch ist und an dem Düsenkörper (4) und an der Ventilnadel (8) verschweißt ist, wobei
die Wellrohrdichtung (27) im Durchmesser etwas größer als der Dichtsitz ist, wobei
die Wellrohrdichtung (27) so in dem Brennstoffeinspritzventil (1) angeordnet ist, dass eine hydraulische Kraftkomponente in einer Schließrichtung auf die Ventilnadel (8) und in einer Öffnungsrichtung auf den Ventilschließkörper (7) wirkt und die Komponente in Schließrichtung überwiegt, **dadurch gekennzeichnet,**
**dass** an einem abströmseitigen Ende der Ventilnadel (8) eine Drallvorrichtung (31) angeordnet ist, und
**dass** die Drallvorrichtung (31) in Form eines auf die Ventilnadel (8) aufgepressten Rings (32) ausgebildet ist.

2. Brennstoffeinspritzventil nach Anspruch 1,
**dadurch gekennzeichnet,**
**dass** der Ring (32) formschlüssig auf die Ventilnadel (8) aufgepresst ist.

3. Brennstoffeinspritzventil nach Anspruch 2,
**dadurch gekennzeichnet,**
**dass** zwischen dem Ring (32) und dem Düsenkörper (4) des Brennstoffeinspritzventils (1) ein Ringspalt (33) ausgebildet ist.

4. Brennstoffeinspritzventil nach einem der Ansprüche 1 bis 3,
**dadurch gekennzeichnet,**
**dass** in dem Ring (32) Durchströmöffnungen (34) ausgebildet sind.

5. Brennstoffeinspritzventil nach Anspruch 4,
**dadurch gekennzeichnet,**
**dass** sich die Durchströmöffnungen (34) von einer zuströmseitigen Stirnfläche (35) zu einer abströmseitigen Stirnfläche (36) des Rings (32) erstrecken.

6. Brennstoffeinspritzventil nach Anspruch 4 oder 5,
**dadurch gekennzeichnet,**
**dass** die Durchströmöffnungen (34) regelmäßig über einen Umfang des Rings (32) verteilt angeordnet sind.

7. Brennstoffeinspritzventil nach einem der Ansprüche 4 bis 6,
**dadurch gekennzeichnet,**
**dass** die Durchströmöffnungen (34) schräg in dem Ring (32) ausgebildet sind.

8. Brennstoffeinspritzventil nach einem der Ansprüche 4 bis 7,
**dadurch gekennzeichnet,**
**dass** der die schrägen Durchströmöffnungen (34) durchströmende Brennstoff eine Geschwindigkeitskomponente in einer Umfangsrichtung erfährt.

9. Brennstoffeinspritzventil nach einem der Ansprüche 4 bis 8,
**dadurch gekennzeichnet,**
**dass** die Durchströmöffnungen (34) nach Anzahl und Durchmesser so dimensioniert sind, dass sie eine Strahlwinkeländerung bewirken.

## Claims

1. Fuel injection valve (1), in particular for directly injecting fuel into the combustion chamber of an internal combustion engine, having a valve needle (8) which can be actuated by an actuator (17) and is acted on by a valve closing spring (11) in such a way that a valve closing body (7) which is operatively connected to the valve needle (8) and faces towards the combustion chamber is held, in the non-actuated state of the actuator (17), in sealing contact against a valve seat face (6) which is formed on a nozzle body (4), with a corrugated tube seal (27) being on an inflow-side end of the valve needle (8) and the fuel injection valve (1) is designed as an outside-opening fuel injection valve (1),
wherein the corrugated tube seal (27) is elastic and is welded to the nozzle body (4) and to the valve needle (8), wherein the corrugated tube seal (27) is slightly larger in diameter than the sealing seat,
wherein the corrugated tube seal (27) is arranged in the fuel injection valve (1) in such a way that a hydraulic force component acts in a closing direction on the valve needle (8) and in an opening direction on the valve closing body (7), and the component in the closing direction prevails,
**characterized**
**in that** a swirl device (31) is arranged at an outflow-side end of the valve needle (8), and
**in that** the swirl device (31) is designed in form of a ring (32) pressed onto the valve needle (8).

2. Fuel injection valve according to Claim 1,
**characterized**
**in that** the ring (32) is pressed in a form-fitting manner onto the valve needle (8).

3. Fuel injection valve according to Claim 2,
**characterized**
**in that** an annular gap (33) is formed between the ring (32) and the nozzle body (4) of the fuel injection valve (1).

4. Fuel injection valve according to one of Claims 1 to 3,
**characterized**
**in that** throughflow openings (34) are formed in the ring (32).

5. Fuel injection valve according to Claim 4,
**characterized**
**in that** the throughflow openings (34) extend from an inflow-side end face (35) to an outflow-side end face (36) of the ring (32).

6. Fuel injection valve according to Claim 4 or 5,
**characterized**
**in that** the throughflow openings (34) are arranged so as to be distributed uniformly over a periphery of the ring (32).

7. Fuel injection valve according to one of Claims 4 to 6,
**characterized**
**in that** the throughflow openings (34) are formed obliquely in the ring (32).

8. Fuel injection valve according to one of Claims 4 to 7,
**characterized**
**in that** the fuel which flows through the oblique throughflow openings (34) experiences a speed component in a peripheral direction.

9. Fuel injection valve according to one of Claims 4 to 8,
**characterized**
**in that** the throughflow openings (34) are dimensioned in terms of number and diameter so as to bring about a jet angle variation.

## Revendications

1. Injecteur de carburant (1) notamment pour injecter directement du carburant dans la chambre de combustion d'un moteur à combustion interne comprenant une aiguille d'injecteur (8) commandée par un actionneur (17) et sollicitée par un ressort de fermeture d'injecteur (11), un organe d'obturation de soupape (7) coopérant avec l'aiguille d'injecteur (8), organe tourné vers la chambre de combustion, étant en appui étanche contre une surface de siège de soupape (6) réalisée sur le corps de buse (4) lorsque l'actionneur (17) n'est pas commandé, l'extrémité coté amont de l'aiguille d'injecteur (8) comportant un joint à tube ondulé (27),
- le joint à tube ondulé (27) est élastique et il est soudé au corps de buse (4) et à l'aiguille d'injecteur (8),
- le joint à tube ondulé (27) a un diamètre légèrement supérieur à celui du siège d'étanchéité,
- le joint à tube ondulé (27) est installé dans l'injecteur (1) pour qu'une composante de force hydraulique agisse dans le sens de la fermeture sur l'aiguille d'injecteur (8) et dans le sens de l'ouverture sur l'organe d'obturation de soupape (7) et dépasse les composants agissant dans le sens de la fermeture, et
**caractérisé en ce que**
l'extrémité aval de l'aiguille d'injecteur (8) comporte un dispositif engendrant un écoulement en rotation (31), et
le dispositif engendrant l'écoulement en rotation (31) a la forme d'un anneau (32) prévu sur le côté d'arrivée de l'aiguille d'injecteur (8).

2. Injecteur de carburant selon la revendication 1,
**caractérisé en ce que**
l'anneau (32) est emmanché de force par une liaison par la forme sur l'aiguille d'injecteur (8).

3. Injecteur de carburant selon la revendication 2,
**caractérisé par**
un intervalle annulaire (33) réalisé entre l'anneau (32) et le corps de buse (4 de l'injecteur de carburant (1).

4. Injecteur de carburant selon l'une des revendications 1 à 3,
**caractérisé par**
des orifices de passage (34) réalisés dans l'anneau (32).

5. Injecteur de carburant selon la revendication 4,
**caractérisé en ce que**
les orifices de passage (34) s'étendent d'une surface frontale (35) côté amont jusqu'à une surface frontale (36) côté aval de l'anneau (32).

6. Injecteur de carburant selon l'une des revendications 4 ou 5,
**caractérisé en ce que**
les orifices de passage (34) sont répartis régulièrement à la périphérie de l'anneau (32).

7. Injecteur de carburant selon l'une des revendications 4 à 6,
**caractérisé en ce que**
les orifices de passage (34) sont inclinés dans l'anneau (32).

8. Injecteur de carburant selon l'une des revendications 4 à 7,
**caractérisée en ce que**
le carburant qui traverse les orifices de passage (34) inclinés, reçoit une composante de vitesse dans la direction périphérique.

9. Injecteur de carburant selon l'une des revendications 4 à 8,
**caractérisé en ce que**
les orifices de passage (34) sont dimensionnés en nombre et en diamètre pour produire une variation de l'angle du jet.
